(19) Europäisches Patentamt
European Patent Office
Office européen des brevets

(11) **EP 2 834 097 B1**

(12) **FASCICULE DE BREVET EUROPEEN**

(45) Date de publication et mention
de la délivrance du brevet:
**20.11.2019 Bulletin 2019/47**

(51) Int Cl.:
**B60K 6/442** *(2007.10)* **B60W 20/00** *(2016.01)*
**B60W 10/08** *(2006.01)* **B60W 10/02** *(2006.01)*
**B60W 30/18** *(2012.01)*

(21) Numéro de dépôt: **13715351.6**

(22) Date de dépôt: **19.03.2013**

(86) Numéro de dépôt international:
**PCT/FR2013/050591**

(87) Numéro de publication internationale:
**WO 2013/150206 (10.10.2013 Gazette 2013/41)**

(54) **PROCEDE DE COMMANDE DE LA RECHARGE DE LA BATTERIE SUR UN VEHICULE HYBRIDE**

VERFAHREN ZUR STEUERUNG DES AUFLADENS DER BATTERIE BEI EINEM HYBRIDFAHRZEUG

METHOD FOR CONTROLLING RECHARGING OF THE BATTERY ON A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2012 FR 1253048**

(43) Date de publication de la demande:
**11.02.2015 Bulletin 2015/07**

(73) Titulaire: **Renault S.A.S.**
**92100 Boulogne-Billancourt (FR)**

(72) Inventeurs:
• **DEBERT, Maxime**
**F-VERSAILLES 78000 (FR)**
• **VESPASIEN, Jean-Marie**
**F-94600 Choisy-le-roi (FR)**

(56) Documents cités:
**EP-A2- 1 306 257 FR-A1- 2 950 302**
**FR-A1- 2 955 715 US-B1- 6 435 296**

**EP 2 834 097 B1**

**Description**

La présente invention se rapporte au domaine des transmissions hybrides pour véhicules automobiles comportant d'une part un moteur thermique d'entraînement et d'autre part au moins une machine électrique.

Plus précisément, elle a pour objet un procédé de commande de recharge de la batterie de traction sur une transmission hybride pour véhicule automobile muni d'un moteur thermique et d'au moins une machine électrique où la machine électrique est utilisée comme seule source d'énergie motrice jusqu'à un seuil de vitesse, au delà duquel il est possible de coupler le moteur thermique aux roues sur des modes hybrides pour cumuler les apports d'énergie du moteur thermique et de la machine électrique.

Cette invention trouve une application non limitative sur une transmission hybride pour véhicule automobile muni d'un moteur thermique et d'une machine électrique d'entraînement, comportant deux arbres primaires concentriques portant chacun au moins un pignon de descente sur un arbre secondaire relié aux roues du véhicule et un premier moyen de couplage entre deux arbres primaires pouvant occuper trois positions.

Le document FR 2 955 715 A1 montre un procédé selon le préambule de la revendication 1.

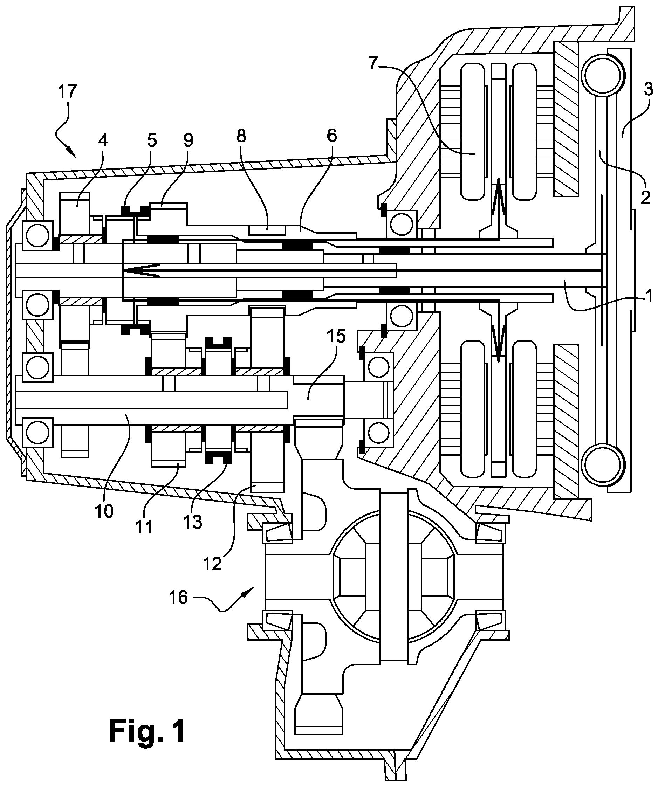

La figure 1 décrit un exemple non limitatif de transmission hybride relevant de ce principe d'architecture. Cette transmission comporte un arbre primaire plein 1 connecté directement par l'intermédiaire d'un système de filtration (moyeu amortisseur, « damper », double volant ou autre) 2, au volant d'inertie 3 d'un moteur thermique (non représenté). L'arbre plein 1 porte un pignon fou 4 pouvant être connecté avec celui-ci par un premier système de couplage 5 (crabot, synchroniseur, ou autre type de coupleur progressif ou non). Un arbre primaire creux 6 est relié au rotor d'une machine électrique 7, de préférence (mais non obligatoirement) de type machine type axial discoïde. D'autres types de machine électrique sont également utilisables dans le cadre de l'invention, par exemple des machines radiales, à aimant ou à bobine d'excitation, ou des machines à réluctance. L'arbre creux 6 porte deux pignons fixes 8, 9. L'arbre creux 6 peut être relié à l'arbre primaire plein 1 par intermédiaire du système de couplage 5. Un arbre secondaire 10 porte deux pignons fous 11 et 12. On peut relier les pignons fous 11, 12 à l'arbre primaire par l'intermédiaire d'un deuxième système de couplage 13 (crabot, synchroniseur, ou autre type de coupleur progressif ou non). L'arbre secondaire 10 porte également un pignon fixe 14 et un pignon de descente 15 vers un différentiel 16 relié aux roues (non représentées) du véhicule.

Comme indiqué plus haut, le premier moyen de couplage 5 peut occuper au moins trois positions dans lesquelles :

- le moteur thermique est découplé de la chaîne cinématique reliant la machine électrique 7 aux roues (position 1),
- le moteur thermique entraîne les roues avec ou sans l'appoint de la machine électrique (position 2), et
- le moteur thermique et la machine électrique 7 sont couplés de manière à additionner en direction des roues leurs couples respectifs (position 3).

Dans l'hypothèse où, par construction, un véhicule équipé d'une telle transmission ne peut pas utiliser le moteur thermique pour participer à la traction du véhicule en dessous d'un seuil de vitesse, la batterie est majoritairement en décharge aux faibles vitesses du véhicule. Au-delà du seuil de vitesse, le système de gestion d'énergie du véhicule est capable de répartir la puissance entre le moteur thermique et la machine électrique, de manière à assurer au véhicule un minimum d'autonomie en mode électrique. Lorsque le véhicule roule régulièrement en dessous du seuil de vitesse, le problème se pose de disposer en toute circonstance d'une réserve d'énergie dans la batterie, propre à assurer au moins le lancement du véhicule jusqu'à la mise en route du moteur thermique. Sans cette réserve d'énergie électrique, le véhicule est obligatoirement immobilisé dans un « mode recharge bord de route », où le moteur thermique recharge la batterie véhicule à l'arrêt, avant que la batterie dispose de l'énergie suffisante pour lancer à nouveau le véhicule.

La présente invention a pour but de palier l'inconvénient d'immobiliser le véhicule en bord de route pour recharger la batterie.

Dans ce but, elle propose qu'en dessous d'un seuil de vitesse, la machine électrique assure seule le couple à transmettre aux roues tandis que le moteur thermique est allumé pour prévoir la recharge sans participer à la traction du véhicule, lorsque le conducteur appuie sur la pédale d'accélérateur, alors que les roues sont découplées du moteur thermique et de la machine électrique lorsque le conducteur n'appuie pas sur la pédale d'accélérateur.

De plus, lorsque le conducteur appuie sur la pédale de frein ou qu'il relâche complètement la pédale d'accélérateur, ni la machine électrique ni le moteur thermique ne participent à la traction. Ils sont alors utilisés pour l'activation du mode de recharge.

La présente invention sera mieux comprise à la lecture de la description suivante d'un mode de réalisation non limitatif de celle-ci, en se reportant aux dessins annexés sur lesquels :

- la figure 1 illustre la régénération de la batterie de traction d'un véhicule sur une transmission hybride au point mort,
- les figures 2 à 7 illustrent les différentes possibilités de fonctionnement de cette transmission, et

- la figure 8 illustre la mise en oeuvre du procédé sur la transmission décrite.

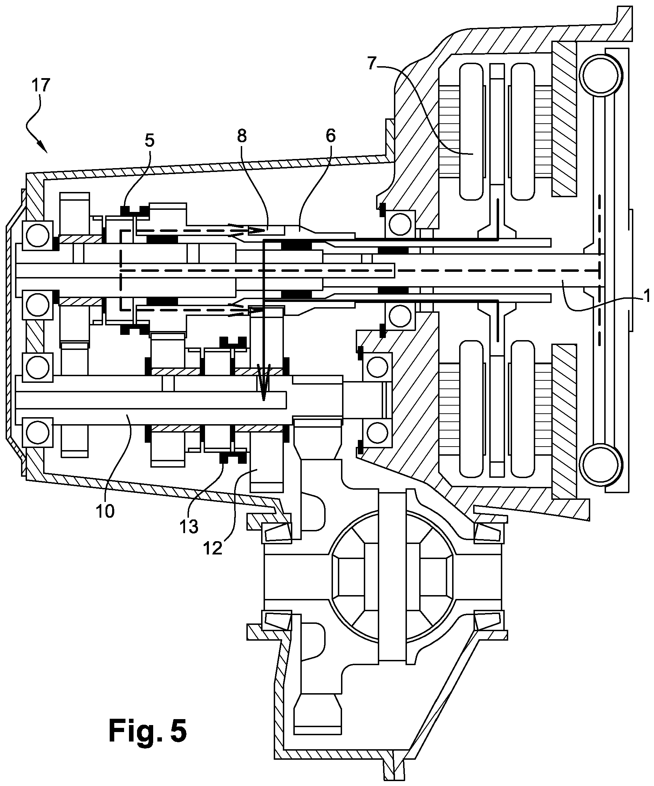

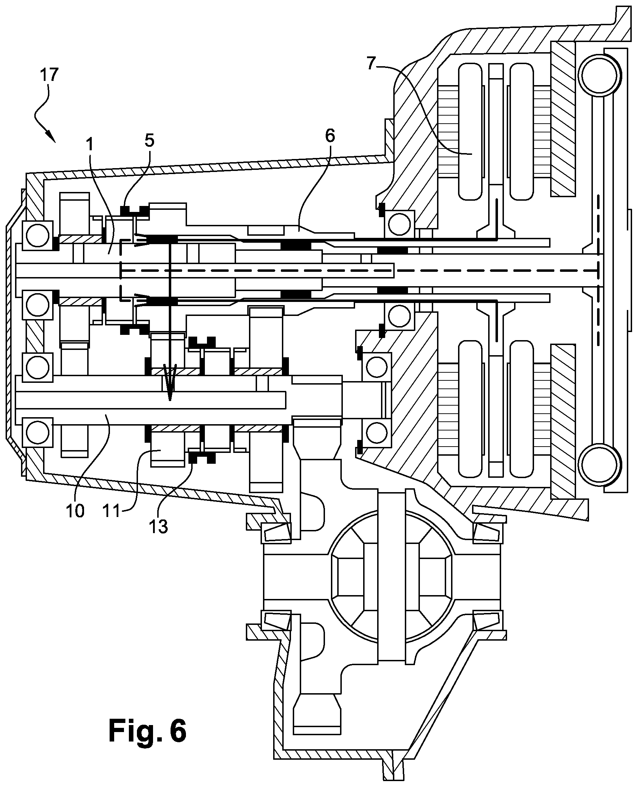

Sur la figure 1, le premier système de couplage est en position 3, comme sur les figures 5 et 6, c'est à dire qu'il lie en rotation l'arbre primaire plein 1 et l'arbre primaire creux 6. Le deuxième système de couplage 13 est ouvert. La transmission est donc au « point mort ». Le moteur thermique tournant peut entraîner la machine électrique de traction fonctionnant alors en générateur pour recharger les batteries du véhicule à l'arrêt.

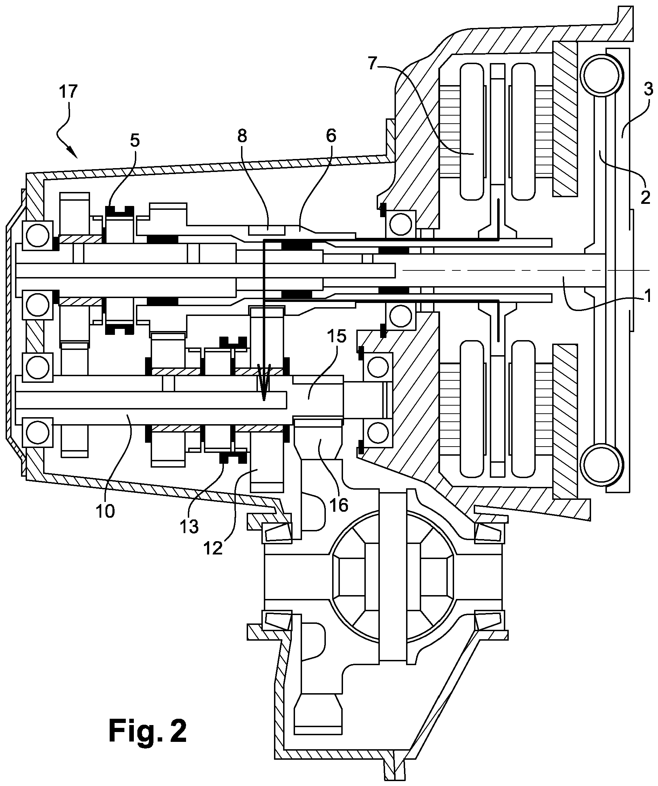

Sur la figure 2, le premier système de couplage 5 est ouvert (position 1), tandis que le deuxième système de couplage 13 est fermé de manière à solidariser le pignon fou du rapport court 12 avec l'arbre secondaire 10. La transmission est en mode électrique sur le rapport court, ou premier rapport de marche avant.

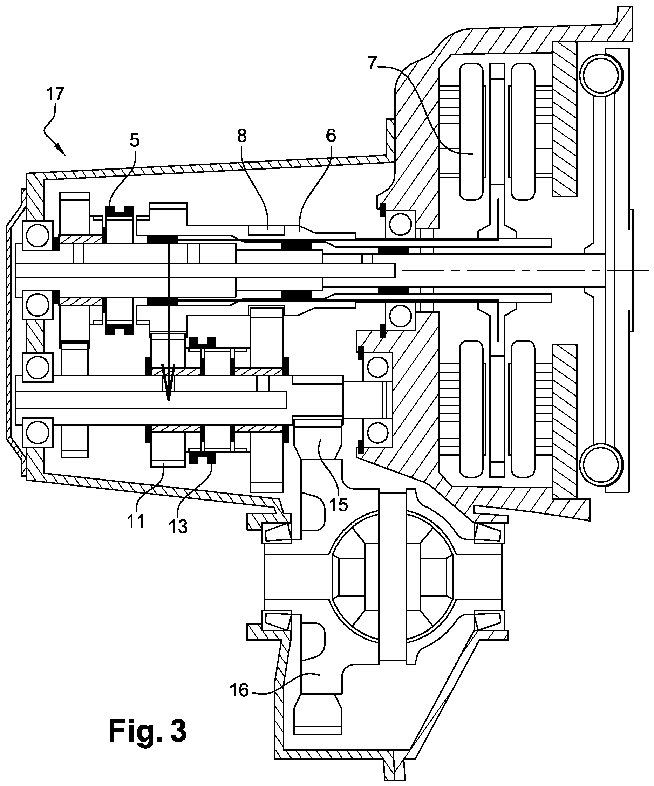

Sur la figure 3, le premier système de couplage 5 est toujours ouvert (position 1), tandis que le deuxième système de couplage 13 est fermé, de manière à solidariser le pignon fou du rapport intermédiaire 11 avec l'arbre secondaire 10. La transmission est en mode électrique sur le rapport intermédiaire, ou deuxième rapport de marche avant.

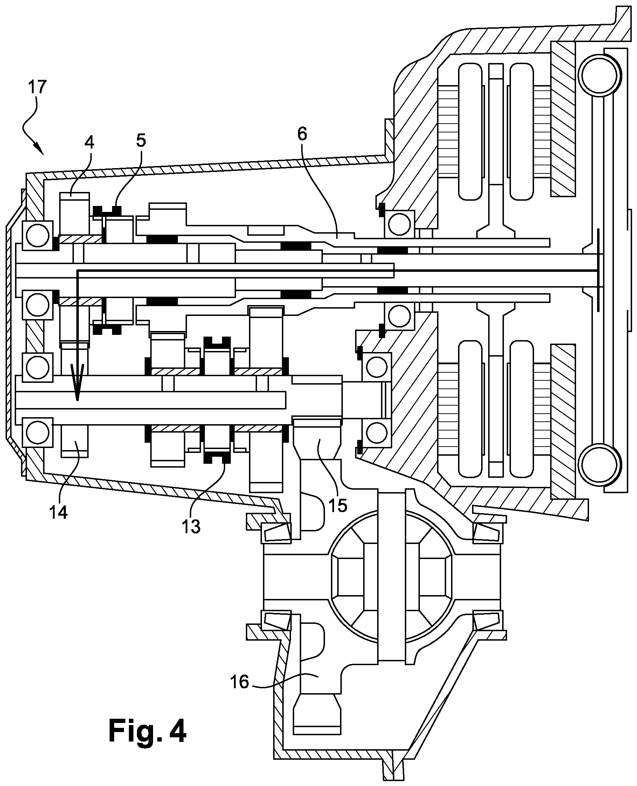

Sur la figure 4, le premier système de couplage 5 est fermé en position 2, de manière à rendre solidaire le pignon fou 4 porté par l'arbre plein 1, avec celui-ci, tandis que le deuxième moyen de couplage 13 est ouvert. La transmission est sur le rapport long, ou de troisième. La machine électrique ne fournit pas de couple.

Sur la figure 5, le premier moyen de couplage 5 est fermé en position 3, de manière à rendre solidaires l'arbre plein 1 et l'arbre creux 6. Le deuxième système de couplage 13 est fermé, de manière à rendre solidaire le pignon fou du rapport court 12 et l'arbre secondaire 10. La transmission est en mode hybride sur le rapport court. Les apports du moteur thermique et de la machine électrique sur la chaîne de traction se cumulent. Ils sont transmis de l'arbre primaire creux 6 sur l'arbre secondaire par la descente de pignons 8, 12.

Sur la figure 6, le premier moyen de couplage 5 est toujours fermé, en position 3, comme sur la figure 5. L'arbre primaire plein 1, est donc solidaire de l'arbre primaire creux 6. Le deuxième système de couplage 13 est également fermé : le pignon fou 11 du rapport intermédiaire est solidaire de l'arbre secondaire 10. La transmission est en mode hybride sur le rapport intermédiaire. Les apports du moteur thermique et de la machine électrique sur la chaîne de traction se cumulent.

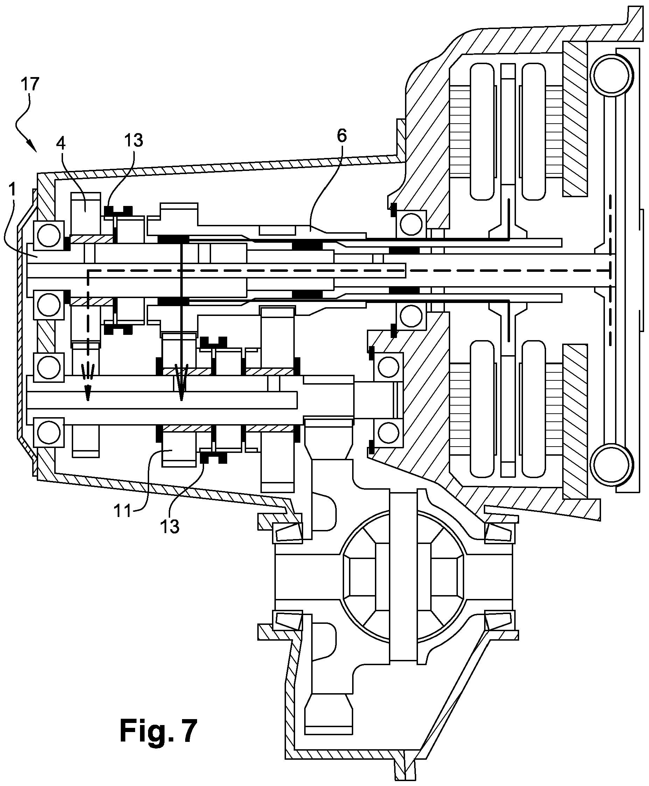

Sur la figure 7, le premier système de couplage 5 est fermé en position 2 : il rend solidaire le pignon fou 4 porté par l'arbre primaire plein 1, avec celui-ci. Par ailleurs, le deuxième moyen de couplage 13 est fermé de manière à rendre solidaire le pignon fou 11 de rapport intermédiaire avec l'arbre secondaire 10. La transmission est en mode hybride sur le rapport long, avec cumul des apports du moteur thermique et de la machine électrique.

La stratégie de pilotage du mode de recharge de la batterie proposée est mise en œuvre de préférence en-dessous d'un seuil d'énergie S1 et désactivée au dessus d'un seuil S2>S1 de la batterie. Par ailleurs, elle tient compte d'un seuil de vitesse V du véhicule, qui peut correspondre au seuil d'engagement du moteur thermique pour participer à la traction. Le pilotage de la recharge batterie est différent dans une zone basse vitesse, c'est-à-dire en dessous du seuil V, et dans une zone haute vitesse, c'est-à-dire au dessus du seuil V.

A basse vitesse, il n'est pas possible d'agir sur les points de fonctionnement, et la machine électrique assure seule le couple à transmettre aux roues. Le moteur thermique est allumé pour prévoir la recharge, mais ne participe pas à la traction du véhicule. Lorsque le conducteur appuie sur la pédale d'accélérateur (sans toucher à la pédale de frein), la chaîne cinématique de la transmission est celle de la figure 2.

Lorsque le conducteur n'appuie pas sur la pédale d'accélérateur (levé de pied) ou lorsqu'il appuie sur la pédale de frein, la transmission est dans la configuration de la figure 1 (mode recharge). Les roues sont découplées des organes de traction (moteur et machine). Le point de fonctionnement est défini par des contraintes acoustiques et par la minimisation de la consommation. Pour des raisons acoustiques, la plage de fonctionnement du moteur thermique est réduite (c'est-à-dire qu'il ne peut dépasser une vitesse de rotation).

A haute vitesse, le moteur thermique assure le couple à la roue et un complément, que prélèvera la machine électrique pour recharger la batterie. La chaîne cinématique peut être la même avec et sans appui sur la pédale d'accélérateur. La quantité de couple prélevée pour recharger la batterie est choisie pour minimiser la fonction suivante:

```
H_eq = Conso thermique (Couple moteur, Régime moteur) + s X

Conso électrique (Couple machine, Régime machine),
```

dans laquelle H_eq est la quantité totale d'énergie consommée et s est le facteur d'équivalence, qui donne la correspondance entre l'énergie électrique avec l'énergie mécanique (par exemple entre 1kWh et son équivalent en grammes de carburant). Les régimes du moteur thermique et de la machine électrique sont imposés par la vitesse du véhicule et le mode de couplage de la transmission, ce qui veut dire que la stratégie s'adapte en fonction de celle-ci. Le facteur d'équivalence « s » favorise lorsque la stratégie est activée la recharge de la batterie. Les fonctions Conso thermique et Conso électrique sont des cartographies de consommation obtenues sur les bancs d'essais. La chaîne cinématique choisie est celle du mode « hybride ville » de la figure 5, celle du mode « hybride route » de la figure 6, ou celle du mode « hybride autoroute » de la figure 7, selon la vitesse du véhicule, c'est-à-dire celle d'un de ses modes hybrides habituels. La stratégie consiste à choisir la répartition de couple pour minimiser la fonction H eq :

- à haute vitesse, lorsque la stratégie de recharge n'est pas activée, le facteur d'équivalence est choisi pour minimiser la consommation globale d'énergie, dans des limites acceptables, il est en effet possible d'adapter le couple et le régime moteur thermique, pour trouver le meilleur point de fonctionnement de la transmission, en tenant compte du rendement de la machine électrique et du moteur thermique, lorsque la sratégie de recharge est activée, le facteur d'équivalence est choisi tel qu'il favorise la recharge de la batterie

- à basse vitesse, lorsque la stratégie de recharge n'est pas activée, la machine électrique assure seule la traction, le moteur thermique est éteint et lorsque le conducteur relâche l'accélérateur ou appuie sur le frein le mode cinématique reste celui de la figure 2 pour récupérer l'énergie cinétique de la décélération, lorsque la stratégie de recharge est activé, la machine électrique assure seule la traction, le moteur thermique est allumé et lorsque le conducteur relâche l'accélérateur ou appuie sur le frein le mode cinématique reste celui de la figure 1 pour recharger la batterie via le moteur thermique.

Lorsque le conducteur passe au neutre, à basse et haute vitesse, le pilotage est le même qu'en appui sur le frein à basse vitesse : passage en mode recharge et minimisation de la fonction H_eq en fonction du régime et du couple moteur tout en respectant les contraintes acoustiques, les roues étant découplées du moteur thermique et de la machine électriques.

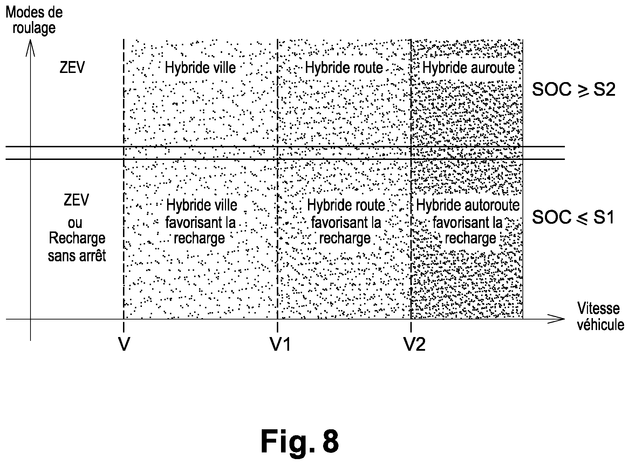

La figure 8 illustre la mise en œuvre de l'invention sur la transmission décrite ci-dessus. Le seuil de vitesse V est par exemple 16 kilomètres par heure, si cette vitesse correspond au seuil d'accouplement du moteur thermique. Ce seuil peut être celui qui est retenu de manière plus générale dans un mode d'utilisation du véhicule dit de prolongation d'autonomie, ou « long range » dans lequel on connecte le moteur thermique après un décollage électrique, dès que la vitesse le permet (à 1500 tour par minute, par exemple à 16 Km/h). Les deux premiers rapports deviennent alors hybrides, et la machine électrique est utilisée essentiellement en régénération. Ces deux modes hybrides « ville » (cf. figure 5) et « route » (cf. figure 6), sont complétés, si on le souhaite, par le troisième mode hybride « autoroute » de la figure 7.

La figure 8 à fait apparaître deux valeurs distinctes S1 et S2 de l'état d'énergie (SOC) de la batterie, pour seuil d'activation lorsque l'état d'énergie courant est inférieur à S1 et pour seuil de désactivation S2 lorsque l'état d'énergie courant est supérieur à S2. Comme indiqué plus haut, à basse vitesse, la transmission présente deux configurations différentes en dessous et au dessus du seuil d'activation. En revanche elle ne change plus d'état en fonction de l'état d'énergie la batterie au-delà du seuil V, sur ses trois modes hybrides mais bénéficie d'un pilotage ciblé, favorisant la recharge en dessous du seuil d'activation et favorisant la consommation réduite au dessus de celui-ci, par le choix d'un facteur d'équivalence approprié.

En conclusion, le procédé de commande proposé par l'invention permet de recharger la batterie en roulage dans un mode de fonctionnement cohérent dit « mode de recharge sans arrêt », qui permet de prévenir l'immobilisation d'un véhicule hybride pour recharger la batterie, lorsque le véhicule n'a pas la possibilité de se lancer et de rouler aux faibles vitesses sur le moteur thermique seul. Il permet dans ce cas de continuer à utiliser le véhicule dans un mode spécifique, pour recharger la batterie en roulant. Ce procédé est applicable sur toute transmission du type décrit ci-dessus et sur un véhicule équipé d'une telle transmission, mais également sur toute autre transmission et tout autre véhicule hybride, dont la construction ne permet pas d'entrainer le véhicule par le moteur thermique sur une plage de vitesse.

## Revendications

1. Procédé de commande de recharge de batterie de traction sur une transmission hybride pour véhicule automobile muni d'un moteur thermique et d'au moins une machine électrique où la machine électrique (7) est utilisée comme seule source d'énergie motrice jusqu'à un seuil de vitesse (V) au delà duquel il est possible de coupler le moteur thermique aux roues sur des modes hybrides pour cumuler les apports d'énergie du moteur thermique et de la machine électrique, **caractérisé en ce que** en dessous du seuil de vitesse, la machine électrique assure seule le couple à transmettre aux roues tandis que le moteur thermique est allumé pour prévoir la recharge sans participer à la traction du véhicule lorsque le conducteur appuie sur la pédale d'accélérateur, alors que les roues sont découplées du moteur thermique et de la machine électrique lorsque le conducteur n'appuie pas sur la pédale d'accélérateur pour permettre la recharge de la batterie.

2. Procédé de commande selon la revendication 1, **caractérisé en ce qu'**il est mis en œuvre entre un seuil inférieur d'activation (S1) et un seuil supérieur de désactivation (S2)

**3.** Procédé de commande de recharge de batterie selon la revendication 1 ou 2, **caractérisé en ce que**, en dessous du seuil de vitesse (V) les roues sont découplées du moteur thermique et de la machine électrique, lorsque le conducteur appuie sur la pédale de frein.

**4.** Procédé de commande de recharge de batterie selon la revendication 1, 2 ou 3, **caractérisé en ce que** lorsque le conducteur passe au neutre, le moteur thermique et la machine électrique sont utilisées pour recharger la batterie de traction.

**5.** Procédé de commande de recharge de batterie selon l'une des revendications précédentes, **caractérisé en ce qu'**au dessus du seuil de vitesse (V), le moteur thermique assure le couple à la roue et un complément d'énergie prélevé par la machine électrique pour recharger la batterie,

**6.** Procédé de commande de recharge de batterie selon la revendication 4 ou 5, **caractérisé en ce qu'**au dessus du seuil de vitesse (V) la transmission est sur un mode hybride piloté, où La quantité de couple prélevée pour recharger la batterie est choisie pour minimiser la quantité totale d'énergie consommée.

**7.** Procédé de commande de recharge de batterie selon la revendication 2, **caractérisée en ce que** si la stratégie n'est pas activée, le facteur d'équivalence, (s) entre l'énergie électrique et l'énergie mécanique est choisi de manière à minimiser la consommation.

**8.** Procédé de commande de recharge de batterie selon la revendication 2 ou 7, **caractérisé en ce que** si la stratégie est activée, le facteur d'équivalence, (s) entre l'énergie électrique et l'énergie mécanique est choisi de manière à favoriser la recharge de la batterie.

**Patentansprüche**

**1.** Verfahren zur Steuerung des Aufladens einer Traktionsbatterie bei einem Hybridgetriebe für ein Kraftfahrzeug, das mit einem Verbrennungsmotor und mit mindestens einer elektrischen Maschine ausgestattet ist, wobei die elektrische Maschine (7) als einzige Antriebsenergiequelle bis zu einer Geschwindigkeitsschwelle (V) verwendet wird, über die hinaus es möglich ist, den Verbrennungsmotor mit den Rädern in Hybridbetriebsarten zu koppeln, um die Energiezufuhren des Verbrennungsmotors und der elektrischen Maschine zu kumulieren, **dadurch gekennzeichnet, dass** unterhalb der Geschwindigkeitsschwelle die elektrische Maschine alleine das an die Räder zu übertragende Drehmoment gewährleistet, während der Verbrennungsmotor gezündet wird, um das Aufladen vorzusehen, ohne an der Traktion des Fahrzeugs beteiligt zu sein, wenn der Fahrer auf das Gaspedal tritt, während die Räder vom Verbrennungsmotor und von der elektrischen Maschine entkoppelt werden, wenn der Fahrer nicht auf das Gaspedal tritt, um das Aufladen der Batterie zu erlauben.

**2.** Steuerverfahren nach Anspruch 1, **dadurch gekennzeichnet, dass** es zwischen einer unteren Aktivierungsschwelle (S1) und einer oberen Deaktivierungsschwelle (S2) durchgeführt wird.

**3.** Verfahren zur Steuerung des Aufladens einer Batterie nach Anspruch 1 oder 2, **dadurch gekennzeichnet, dass** unter der Geschwindigkeitsschwelle (V) die Räder vom Verbrennungsmotor und von der elektrischen Maschine entkoppelt werden, wenn der Fahrer auf das Bremspedal tritt.

**4.** Verfahren zur Steuerung des Aufladens einer Batterie nach Anspruch 1, 2 oder 3, **dadurch gekennzeichnet, dass**, wenn der Fahrer in den Leerlauf übergeht, der Verbrennungsmotor und die elektrische Maschine verwendet werden, um die Traktionsbatterie aufzuladen.

**5.** Verfahren zur Steuerung des Aufladens einer Batterie nach einem der vorhergehenden Ansprüche, **dadurch gekennzeichnet, dass** über der Geschwindigkeitsschwelle (V) der Verbrennungsmotor das Drehmoment am Rad und ein Energiekomplement gewährleistet, das von der elektrischen Maschine entnommen wird, um die Batterie aufzuladen.

**6.** Verfahren zur Steuerung des Aufladens einer Batterie nach Anspruch 4 oder 5, **dadurch gekennzeichnet, dass** über der Geschwindigkeitsschwelle (V) das Getriebe in einer gesteuerten Hybridbetriebsart ist, in der die entnommene Drehmomentmenge, um die Batterie aufzuladen, gewählt wird, um die verbrauchte Gesamtenergiemenge zu minimieren.

7. Verfahren zur Steuerung des Aufladens einer Batterie nach Anspruch 2, **dadurch gekennzeichnet, dass**, wenn die Strategie nicht aktiviert ist, der Äquivalenzfaktor (s) zwischen der elektrischen Energie und der mechanischen Energie so gewählt wird, dass der Verbrauch minimiert wird.

8. Verfahren zur Steuerung des Aufladens einer Batterie nach Anspruch 2 oder 7, **dadurch gekennzeichnet, dass**, wenn die Strategie aktiviert ist, der Äquivalenzfaktor (s) zwischen der elektrischen Energie und der mechanischen Energie so gewählt wird, dass das Aufladen der Batterie begünstigt wird.

**Claims**

1. Method for controlling recharging of the traction battery on a hybrid transmission for a motor vehicle equipped with a heat engine and at least one electrical machine, where the electrical machine (7) is used as the sole motor-driven power source up to a speed threshold (V) beyond which it is possible to couple the heat engine with the wheels, in hybrid modes, so as to run the power supplies from the heat engine and the electrical machine simultaneously with each other, **characterized in that**, below the speed threshold, the electrical machine ensures only the torque to be transmitted to the wheels whereas the heat engine is ignited so as to provide recharging without contributing to the pull of the vehicle when the driver presses on the accelerator pedal, while the wheels are decoupled from the heat engine and from the electrical machine when the driver does not press on the accelerator pedal, so as to enable recharging of the battery.

2. Control method according to Claim 1, **characterized in that** said method is implemented between a lower activation threshold (S1) and a higher deactivation threshold (S2).

3. Control method for recharging a battery according to Claim 1 or 2, **characterized in that**, below the speed threshold (V), the wheels are decoupled from the heat engine and from the electrical machine when the driver presses on the brake pedal.

4. Control method for recharging a battery according to Claim 1, 2 or 3, **characterized in that**, when the driver passes to neutral, the heat engine and the electrical machine are used to recharge the traction battery.

5. Control method for recharging a battery according to one of the preceding claims, **characterized in that**, above the speed threshold (V), the heat engine ensures the torque to the wheel and an additional energy drawn by the electrical machine to recharge the battery.

6. Control method for recharging a battery according to Claim 4 or 5, **characterized in that**, above the speed threshold (V), the transmission is in a controlled hybrid mode in which the quantity of torque drawn to recharge the battery is selected to minimize the total quantity of consumed energy.

7. Control method for recharging a battery according to Claim 2, **characterized in that**, if the strategy is not activated, the equivalence factor (s) between the electrical energy and the mechanical energy is selected so as to minimize the consumption.

8. Control method for recharging a battery according to Claim 2 or 7, **characterized in that**, if the strategy is activated, the equivalence factor (s) between the electrical energy and the mechanical energy is selected so as to favour the recharging of the battery.

**Fig. 1**

**Fig. 2**

**Fig. 3**

Fig. 4

**Fig. 5**

**Fig. 6**

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2955715 A1